# EUROPÄISCHE PATENTSCHRIFT

(11) **EP 4 251 432 B1**
(45) Veröffentlichungstag und Bekanntmachung des Hinweises auf die Patenterteilung: **17.06.2026**
(21) Anmeldenummer: 21835995.8
(22) Anmeldetag: 03.12.2021
(51) Int. Cl.: B60B 19/10

(54) **RAD-BAUTEIL FÜR EIN KRAFTFAHRZEUG UND VERFAHREN ZUM BETREIBEN EINES SOLCHEN RAD-BAUTEILS**
WHEEL COMPONENT FOR A MOTOR VEHICLE, AND METHOD FOR OPERATING SUCH A WHEEL COMPONENT
COMPOSANT DE ROUE POUR UN VÉHICULE AUTOMOBILE ET PROCÉDÉ DE FONCTIONNEMENT D'UN TEL COMPOSANT DE ROUE

(30) Priorität: 26.01.2021 DE 102021000358
(43) Veröffentlichungstag der Anmeldung: 04.10.2023
(73) Patentinhaber: Mercedes-Benz Group AG, 70372 Stuttgart (DE)
(72) Erfinder: ESTRADA, Gustavo, 70499 Stuttgart (DE)
(74) Vertreter: Novagraaf Group
(86) Internationale Anmeldenummer: PCT/EP2021/084103
(87) Internationale Veröffentlichungsnummer: WO 2022/161667

(56) Entgegenhaltungen:
- EP-A1- 2 508 361
- DE-A1- 102015 015 721
- DE-A1- 102016 013 286
- DE-B3- 102011 016 535
- US-A1- 2017 043 616

## Beschreibung

Die Erfindung betrifft ein Rad-Bauteil für ein Kraftfahrzeug und ein Verfahren zum Betreiben eines solchen Rad-Bauteils.

Aus der EP 2 508 361 A1 geht ein Fahrzeugrad umfassend eine Felge, einen an dieser Felge befestigten Bremstopf und eine am Bremstopf befestigte Bremsscheibe hervor, wobei an der Felge mehrere schwenkbar gelagerte plattenförmige Abdeckelemente zum temporären Verschließen zugeordneter felgenseitiger Durchbrechungen vorgesehen sind. Jedes Abdeckelement wird fliehkraftbedingt von einer Offenstellung in eine Schließstellung verlagert. Nachteilig an diesem Fahrzeugrad ist, dass die Abdeckelemente ausschließlich von der Fliehkraft verlagert werden und daher in keine individuelle Stellung verlagert werden können.

Die DE 10 2013 114 476 A1 offenbart ein Fahrzeug, welches mit einer Nabe und einem Kranz versehen ist. Die Nabe erstreckt sich von einem Rad in Längsrichtung nach innen. Der Kranz ist über der Nabe angebracht und für eine Bewegung relativ zu der Nabe ausgelegt. Das Fahrzeug umfasst außerdem eine Blendenanordnung, die einen Träger und eine erste und eine zweite Blende besitzt. Der Träger erstreckt sich von dem Kranz radial nach außen und die erste und die zweite Blende sind jeweils schwenkbar mit den gegenüberliegenden Seitenkanten des Trägers verbunden. Die Blenden schenken zwischen einer ausgefahrenen Position und einer eingefahrenen Position und bewegen sich radial translatorisch, um wahlweise eine Radöffnung zu schließen. Nachteilig an dieser Blendenanordnung ist, dass die Blenden nur entweder in die ausgefahrene Position oder in die eingefahrene Position verlagert werden können.

Die DE 10 2015 015 721 A1 offenbart ein Rad für ein Fahrzeug, mit einer Mehrzahl von Speichen, Lamellen, Flügeln, Radsegmente oder dergleichen, welche an einer

Außenseite des Rades angeordnet sind, und mit einer Kinematik, mittels welche die Kontur der Außenseite des Rades veränderbar ist. Weiterhin ist eine Nabe zwischen einer innenliegenden Stellung und einer außenliegenden Stellung verstellbar. Nachteilig an diesem Rad ist, dass eine Entlüftungs-Oberfläche konstant bleibt. Daher sind die Radsegmente nicht für eine Bremsenkühlung geeignet.

Weiterhin geht aus der DE 10 2016 013 286 A1 ein Fahrzeugrad hervor, umfassend eine über Speichen mit dem Radflansch verbundene Felge. An dem Fahrzeugrad ist eine Mehrzahl beweglicher Klappen vorgesehen, welche in Abhängigkeit von einer Fahrzeuggeschwindigkeit in eine die Speichen außenseitig überdeckende Position und in eine die Speichen freigebende Position bewegbar sind, wobei die Klappen klappbar sind oder wobei eine erste Anzahl der Klappen zeitverzögert zu einer weiteren Anzahl der Klappen in Umfangsrichtung des Fahrzeugrades nebeneinander in die die Speichen außenseitig überdeckende Position und, sich einander zumindest bereichsweise überlagernd, in die die Speichen freigebende Position bewegbar sind. Weiterhin ist eine Fliehkraftaktuatorik in einer Kassette angeordnet, welche eine Kugel-Seilzug-Anordnung, eine Kugel-Kulissen-Anordnung oder eine Kipphebelanordnung umfasst. Nachteilig an diesem Fahrzeugrad ist der komplexe und aufwändige Aufbau zur Verlagerung der Klappen.

Ferner geht aus der gattungsbildenden DE 38 16 415 A1 ein hier angesprochenes Rad-Bauteil für ein Kraftfahrzeug hervor.

Der Erfindung liegt daher die Aufgabe zugrunde, ein Rad-Bauteil für ein Kraftfahrzeug und ein Verfahren zum Betreiben eines solchen Rad-Bauteils zu schaffen, wobei die genannten Nachteile zumindest teilweise behoben, vorzugsweise vermieden sind.

Zur Lösung der Aufgabe werden ein Rad-Bauteil für ein Kraftfahrzeug mit den Merkmalen des Anspruchs 1 und ein Verfahren zum Betreiben eines solchen Rad-Bauteils mit den Merkmalen des Anspruchs 5 vorgeschlagen. Vorteilhafte Weiterbildungen ergeben sich aus den abhängigen Ansprüchen.

Das Rad-Bauteil weist ein Felgenbett, eine Radnabe sowie eine Felgenscheibe auf und zeichnet sich dadurch aus, dass das Rad-Bauteil einen Aero-Ring aufweist, welcher in Umfangsrichtung am Felgenbett anliegt und derart flächig ausgebildet ist, dass dieser einen Kreisring ausgehend von dem Felgenbett radial in Richtung der Radnabe bildet, die Felgenscheibe in Richtung einer Drehachse des Rad Bauteils relativ zu der Radnabe zwischen einem Offen-Zustand und einem Geschlossen-Zustand mittels einer Felgenscheiben-Verlagerungsvorrichtung verlagerbar ist, dass bei in Geschlossen-Zustand angeordneter Felgenscheibe diese mit einer äußeren Stirnfläche an einer inneren Stirnfläche des Aero-Rings zumindest bereichsweise abdichtend anliegt, und dass bei im Offen-Zustand angeordneter Felgenscheibe eine bessere Luftströmung durch das Rad-Bauteil ermöglicht ist als bei im Geschlossen-Zustand angeordneter Felgenscheibe.

Der Felgenscheibe ist also ein Offen-Zustand und ein Geschlossen-Zustand zugeordnet, wobei der Offen-Zustand eine bessere Luftströmung durch das Rad-Bauteil ermöglicht, insbesondere einen größeren Strömungsquerschnitt durch das Rad-Bauteil freigibt, als der Geschlossen-Zustand. Die Felgenscheiben-Verlagerungsvorrichtung ist eingerichtet, um die Felgenscheibe in Richtung einer Drehachse des Rad-Bauteils relativ zu der Radnabe zwischen dem Offen-Zustand und dem Geschlossen-Zustand zu verlagern.

Bei einem bevorzugten Ausführungsbeispiel ist vorgesehen, dass der in Umfangsrichtung am Felgenbett des Rad-Bauteils anliegende Aero-Ring derart flächig ausgebildet ist, dass er einen Kreisring ausgehend von dem Felgenbett orthogonal zu der Drehachse in Richtung der Radnabe bildet.

Vorteilhafterweise ermöglicht der Aero-Ring auch in dem Offen-Zustand der Felgenscheibe eine Reduzierung des Luftwiderstands, insbesondere um bis zu 60 % im Vergleich zu einem Rad-Bauteil ohne Aero-Ring. Vorteilhafterweise wirkt sich der Aero-Ring nicht negativ auf eine Kühlung der Bremsen aus.

Vorteilhafterweise ist es mittels der verlagerbaren Felgenscheibe möglich, das Radbauteil entsprechend den Anforderungen dynamisch anzupassen und eine hohe Luftströmung zur Kühlung der Bremsen, eine Verringerung des Luftwiderstandbeiwerts oder eine Luftzufuhr während eines Ladevorgangs einer elektrischen Ladeeinrichtung des Kraftfahrzeugs zu realisieren. Somit kann vorteilhafterweise entsprechend der Anforderung die Aerodynamik oder die Kühlungseffizienz erhöht werden.

Im Kontext der vorliegenden technischen Lehre wird die Luftströmung anhand der Luftmasse, die eine Querschnittfläche pro Zeiteinheit durchströmt, betrachtet. Eine erste Luftströmung wird als besser bezeichnet als eine zweite Luftströmung, falls die Luftmasse der ersten Luftströmung größer ist als die Luftmasse der zweiten Luftströmung. Somit strömt in dem Offen-Zustand eine größere Luftmasse pro Querschnittsfläche und pro Zeiteinheit durch das Rad-Bauteil als in dem Geschlossen-Zustand.

Gemäß einer Weiterbildung der Erfindung ist vorgesehen, dass das Rad-Bauteil eine Felge ist.

Gemäß einer Weiterbildung der Erfindung ist vorgesehen, dass die Felgenscheibe - zumindest mittelbar - drehfest mit der Radnabe verbunden ist. Vorteilhaft weist damit die Felgenscheibe nur einen Freiheitsgrad, insbesondere einen Translations-Freiheitsgrad in Richtung der Drehachse des Rad-Bauteils, relativ zu der Radnabe auf.

In einer weiteren bevorzugten Ausführungsform ist der Aero-Ring in Umfangsrichtung mit dem Felgenbett des Rad-Bauteils verbindbar.

In einer bevorzugten Ausführungsform ist der Aero-Ring in Umfangsrichtung fest mit dem Felgenbett des Rad-Bauteils verbunden.

In einer weiteren bevorzugten Ausführungsform ist der Aero-Ring mit mindestens einer Speiche des Rad-Bauteils verbindbar.

In einer weiteren bevorzugten Ausführungsform ist der Aero-Ring fest mit mindestens einer Speiche des Rad-Bauteils verbunden.

Gemäß einer Weiterbildung der Erfindung ist vorgesehen, dass die Felgenscheibe und der Aero-Ring das gleiche Material aufweisen, insbesondere aus dem gleichen Material bestehen.

Gemäß einer Weiterbildung der Erfindung ist vorgesehen, dass die Felgenscheibe in dem Geschlossen-Zustand mit einer äußeren Stirnfläche an einer inneren Stirnfläche des Aero-Rings radial überlappend und zumindest bereichsweise abdichtend anliegt. Damit wird vorteilhafterweise eine Luftströmung zwischen der Felgenscheibe und dem Aero-Ring reduziert und vorzugsweise vermieden.

Die Aufgabe wird auch gelöst, indem ein Verfahren zum Betreiben eines Rad-Bauteils, insbesondere eines erfindungsgemäßen Rad-Bauteils oder eines Rad-Bauteils nach einem oder mehreren der zuvor erläuterten Ausführungsformen, geschaffen wird, wobei eine Felgenscheibe in Abhängigkeit von mindestens einem Parameter in Richtung einer Drehachse relativ zu einer Radnabe des Rad-Bauteils zwischen einem Offen-Zustand und einem Geschlossen-Zustand verlagert wird. Der Offen-Zustand ermöglicht eine bessere Luftströmung durch das Rad-Bauteil als der Geschlossen-Zustand. Im Zusammenhang mit dem Verfahren ergeben sich insbesondere die Vorteile, die bereits in Zusammenhang mit dem Rad-Bauteil erläutert wurden.

Vorzugsweise befindet sich die Felgenscheibe in dem Offen-Zustand, falls das Kraftfahrzeug geparkt ist, um eine ausreichende Kühlung, insbesondere einer Bremsscheibe und/oder einer Batterie des Kraftfahrzeugs, zu ermöglichen. Alternativ oder zusätzlich wird die Felgenscheibe während das Kraftfahrzeug fährt in den Geschlossen-Zustand verlagert, um den Luftwiderstandsbeiwert des Fahrzeugs zu reduzieren, insbesondere um bis zu 130%.

Besonders bevorzugt kann die Felgenscheibe kontinuierlich in jede beliebige Position zwischen dem Offen-Zustand und dem Geschlossen-Zustand verlagert werden.

Gemäß einer Weiterbildung der Erfindung ist vorgesehen, dass der mindestens eine Parameter ausgewählt ist aus einer Gruppe, bestehend aus einer Drehgeschwindigkeit des Rad-Bauteils, einer Betätigungsanzahl einer Bremsanlage in einem vorbestimmten Zeitintervall, einer Bremsscheiben-Temperatur, und einer Eingabe eines Fahrers des Kraftfahrzeugs.

Gemäß einer Weiterbildung der Erfindung ist vorgesehen, dass die Felgenscheibe in den Offen-Zustand verlagert wird oder in dem Offen-Zustand verbleibt, falls die Drehgeschwindigkeit kleiner ist als eine vorbestimmte erste Grenz-Drehgeschwindigkeit. Zusätzlich wird die Felgenscheibe in den Geschlossen-Zustand verlagert oder verbleibt in dem Geschlossen-Zustand, falls die Drehgeschwindigkeit größer ist als oder gleich ist wie eine vorbestimmte zweite Grenz-Drehgeschwindigkeit.

In einer Ausführungsform des Verfahrens sind die vorbestimmte erste Grenz-Drehgeschwindigkeit und die vorbestimmte zweite Grenz-Drehgeschwindigkeit identisch. Somit befindet sich die Felgenscheibe entweder in dem Offen-Zustand oder in dem Geschlossen-Zustand.

In einer bevorzugten Ausführungsform des Verfahrens sind die vorbestimmte erste Grenz-Drehgeschwindigkeit und die vorbestimmte zweite Grenz-Drehgeschwindigkeit unterschiedlich, insbesondere ist die vorbestimmte erste Grenz-Drehgeschwindigkeit kleiner als die vorbestimmte zweite Grenz-Drehgeschwindigkeit. Vorzugsweise wird die Felgenscheibe in eine Position zwischen dem Offen-Zustand und dem Geschlossen-Zustand verlagert, falls die Drehgeschwindigkeit größer ist als oder gleich ist wie die vorbestimmte erste Grenz-Drehgeschwindigkeit und kleiner ist als die vorbestimmte zweite Grenz-Drehgeschwindigkeit. Die Position zwischen dem Offen-Zustand und dem Geschlossen-Zustand wird vorzugsweise derart gewählt, dass die Felgenscheibe bei einer Drehgeschwindigkeit, welche näher an der vorbestimmten ersten Genz-Drehgeschwindigkeit liegt, räumlich näher an dem Offen-Zustand ist als an dem Geschlossen-Zustand. Zusätzlich wird die Position zwischen dem Offen-Zustand und dem Geschlossen-Zustand vorzugsweise derart gewählt, dass die Felgenscheibe bei einer Drehgeschwindigkeit, welche näher an der vorbestimmten zweiten Genz-Drehgeschwindigkeit liegt, räumlich näher an dem Geschlossen-Zustand ist als an dem Offen-Zustand.

Gemäß einer Weiterbildung der Erfindung ist vorgesehen, dass die Felgenscheibe in den Offen-Zustand verlagert wird oder in dem Offen-Zustand verbleibt, falls die Betätigungsanzahl der Bremsanlage in dem vorbestimmten Zeitintervall größer ist als eine vorbestimmte erste Grenz-Betätigungsanzahl. Zusätzlich wird die Felgenscheibe in den Geschlossen-Zustand verlagert oder verbleibt in dem Geschlossen-Zustand, falls die Betätigungsanzahl der Bremsanlage in dem vorbestimmten Zeitintervall kleiner ist als oder gleich ist wie eine vorbestimmte zweite Grenz-Betätigungsanzahl.

In einer Ausführungsform des Verfahrens sind die vorbestimmte erste Grenz-Betätigungsanzahl und die vorbestimmte zweite Grenz-Betätigungsanzahl identisch. Somit befindet sich die Felgenscheibe entweder in dem Offen-Zustand oder in dem Geschlossen-Zustand.

In einer bevorzugten Ausführungsform des Verfahrens sind die vorbestimmte erste Grenz-Betätigungsanzahl und die vorbestimmte zweite Grenz-Betätigungsanzahl unterschiedlich, insbesondere ist die vorbestimmte erste Grenz-Betätigungsanzahl größer als die vorbestimmte zweite Grenz-Betätigungsanzahl. Vorzugsweise wird die Felgenscheibe in eine Position zwischen dem Offen-Zustand und dem Geschlossen-Zustand verlagert, falls die Betätigungsanzahl in dem vorbestimmten Zeitintervall kleiner ist als oder gleich ist wie die vorbestimmte erste Grenz-Betätigungsanzahl und größer ist als die vorbestimmte zweite Grenz-Betätigungsanzahl. Die Position zwischen dem Offen-Zustand und dem Geschlossen-Zustand wird vorzugsweise derart gewählt, dass die Felgenscheibe bei einer Betätigungsanzahl in dem vorbestimmten Zeitintervall, welche näher an der vorbestimmten ersten Genz- Betätigungsanzahl liegt, räumlich näher an dem Offen-Zustand ist als an dem Geschlossen-Zustand. Zusätzlich wird die Position zwischen dem Offen-Zustand und dem Geschlossen-Zustand vorzugsweise derart gewählt, dass die Felgenscheibe bei einer Betätigungsanzahl in dem vorbestimmten Zeitintervall, welche näher an der vorbestimmten zweiten Genz- Betätigungsanzahl liegt, räumlich näher an dem Geschlossen-Zustand ist als an dem Offen-Zustand.

Gemäß einer Weiterbildung der Erfindung ist vorgesehen, dass die Felgenscheibe in den Offen-Zustand verlagert wird oder in dem Offen-Zustand verbleibt, falls die Bremsscheiben-Temperatur größer ist als eine vorbestimmte erste Grenz-Temperatur. Zusätzlich wird die Felgenscheibe in den Geschlossen-Zustand verlagert oder verbleibt in dem Geschlossen-Zustand, falls die Bremsscheiben-Temperatur kleiner ist als oder gleich ist wie eine vorbestimmte zweite Grenz-Temperatur.

In einer Ausführungsform des Verfahrens sind die vorbestimmte erste Grenz-Temperatur und die vorbestimmte zweite Grenz-Temperatur identisch. Somit befindet sich die Felgenscheibe entweder in dem Offen-Zustand oder in dem Geschlossen-Zustand.

In einer bevorzugten Ausführungsform des Verfahrens sind die vorbestimmte erste Grenz-Temperatur und die vorbestimmte zweite Grenz-Temperatur unterschiedlich, insbesondere ist die vorbestimmte erste Grenz-Temperatur größer als die vorbestimmte zweite Grenz-Temperatur. Vorzugsweise wird die Felgenscheibe in eine Position zwischen dem Offen-Zustand und dem Geschlossen-Zustand verlagert, falls die Bremsscheiben-Temperatur kleiner ist als oder gleich ist wie die vorbestimmte erste Grenz-Temperatur und größer ist als die vorbestimmte zweite Grenz-Temperatur. Die Position zwischen dem Offen-Zustand und dem Geschlossen-Zustand wird vorzugsweise derart gewählt, dass die Felgenscheibe bei einer Bremsscheiben-Temperatur, welche näher an der vorbestimmten ersten Genz-Temperatur liegt, räumlich näher an dem Offen-Zustand ist als an dem Geschlossen-Zustand. Zusätzlich wird die Position zwischen dem Offen-Zustand und dem Geschlossen-Zustand vorzugsweise derart gewählt, dass die Felgenscheibe bei einer Bremsscheiben-Temperatur, welche näher an der vorbestimmten zweiten Genz-Temperatur liegt, räumlich näher an dem Geschlossen-Zustand ist als an dem Offen-Zustand.

Die Erfindung wird im Folgenden anhand der Zeichnung näher erläutert.

Dabei zeigen:
- Fig. 1: eine schematische Darstellung eines Ausführungsbeispiels eines Rad-Bauteils und einer Funktionsweise des Rad-Bauteils, wobei sich eine Felgenscheibe des Rad-Bauteils in einem Offen-Zustand befindet, und
- Fig. 2: eine schematische Darstellung des Ausführungsbeispiels eines Rad-Bauteils und der Funktionsweise des Rad-Bauteils, wobei sich die Felgenscheibe in einem Geschlossen-Zustand befindet.

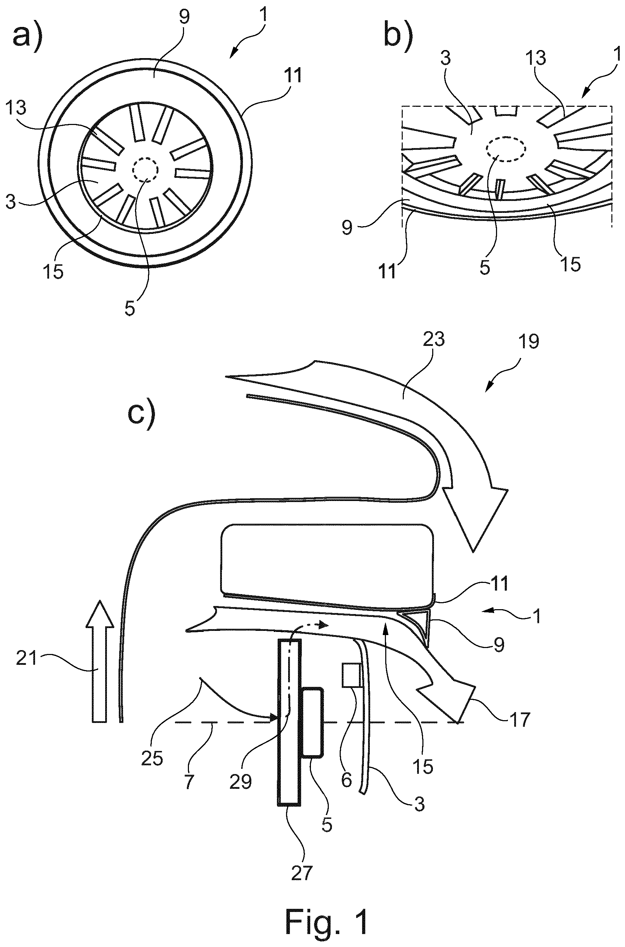

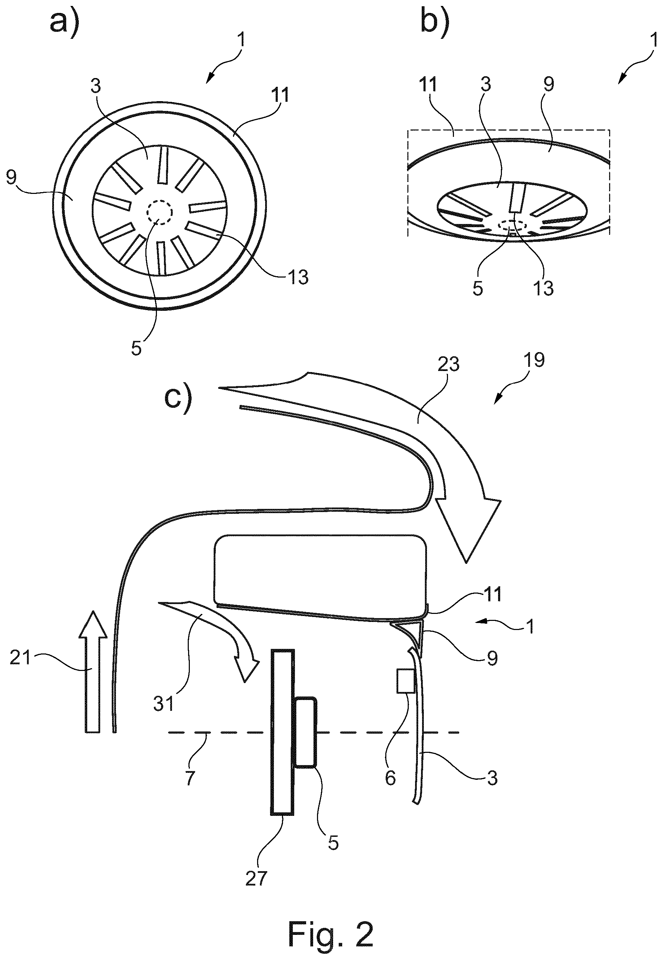

Figur 1 zeigt eine schematische Darstellung eines Ausführungsbeispiels eines Rad-Bauteils 1, insbesondere einer Felge, und einer Funktionsweise des Rad-Bauteils 1, wobei sich eine Felgenscheibe 3 des Rad-Bauteils 1 in einem Offen-Zustand befindet. Das Rad-Bauteil 1 weist eine Radnabe 5, die Felgenscheibe 3 und eine Felgenscheiben-Verlagerungsvorrichtung 6 auf. Die Felgenscheibe 3 weist den Offen-Zustand und einen Geschlossen-Zustand, insbesondere dargestellt in Figur 2, auf, wobei der Offen-Zustand eine bessere Luftströmung 17 durch das Rad-Bauteil 1 ermöglicht als der Geschlossen-Zustand. Weiterhin ist die Felgenscheiben-Verlagerungsvorrichtung 6 eingerichtet, um die Felgenscheibe 3 in Richtung einer Drehachse 7 des Rad-Bauteils 1 relativ zu der Radnabe 5 zwischen dem Offen-Zustand und dem Geschlossen-Zustand zu verlagern.

Vorzugsweise ist die Felgenscheibe 3 drehfest mit der Radnabe 5 verbunden.

Vorzugsweise weist das Rad-Bauteil 1 einen Aero-Ring 9 auf, wobei der Aero-Ring 9 in Umfangsrichtung an einem Felgen-Bett 11 des Rad-Bauteils 1 anliegt. Der Aero-Ring 9 ist derart flächig ausgebildet, dass der Aero-Ring 9 einen Kreisring ausgehend von dem Felgenbett 11 radial, und insbesondere orthogonal zu der Drehachse 7, in Richtung der Radnabe 5 bildet. Besonders bevorzugt ist der Aero-Ring 9 mit dem Felgen-Bett 11 verbindbar oder verbunden. Alternativ oder zusätzlich ist der Aero-Ring 9 vorzugsweise mit mindestens einer Speiche 13 des Rad-Bauteils 1 verbindbar oder verbunden.

Vorzugsweise weisen die Felgenscheibe 3 und der Aero-Ring 9 das gleiche Material auf, insbesondere bestehen die Felgenscheibe 3 und der Aero-Ring 9 aus dem gleichen Material. Alternativ oder zusätzlich weisen die Felgenscheibe 3 und das Felgenbett 11 das gleiche Material auf, insbesondere bestehen die Felgenscheibe 3 und das Felgenbett 11 aus dem gleichen Material. Alternativ oder zusätzlich weisen die Felgenscheibe 3 und die mindestens eine Speiche 13 das gleiche Material auf, insbesondere bestehen die Felgenscheibe 3 und die mindestens eine Speiche 13 aus dem gleichen Material. Alternativ oder zusätzlich weisen die Felgenscheibe 3 und die Radnabe 5 das gleiche Material auf, insbesondere bestehen die Felgenscheibe 3 und die Radnabe 5 aus dem gleichen Material.

Figur 1 a) und Figur 1 b) zeigen das Rad-Bauteil 1 in einer Seitenansicht in dem Offen Zustand. In diesen Ansichten ist deutlich ein Abstand 15 zwischen dem Aero-Ring 9 und der Felgenscheibe 3 zu sehen, welcher in dem Offen-Zustand vorhanden ist und die Luftströmung 17 durch das Rad-Bauteil 1 ermöglicht.

Figur 1 c) zeigt einen Querschnitt durch ein Kraftfahrzeug 19, welches das Rad-Bauteil 1 aufweist. Das Kraftfahrzeug 19 bewegt sich in eine Fahrtrichtung 21 und wird dadurch einem Fahrtwind 23 ausgesetzt. Die Felgenscheibe 3 befindet sich in dem Offen-Zustand, wodurch die Luftströmung 17 durch das Rad-Bauteil 1 ermöglicht wird. Ein Teil des Fahrtwindes 23 wird als kalte Luft 25 an eine Bremsscheibe 27 geleitet. Die kalte Luft 25 kühlt die Bremsscheiben 27, nimmt dabei Wärme auf, und wird dann als warme Luft 29 mittels der Luftströmung 17 durch das Rad-Bauteil 1 abgeleitet, insbesondere von dem Kraftfahrzeug 19 abgeführt.

Figur 2 zeigt eine schematische Darstellung des Ausführungsbeispiels eines Rad-Bauteils 1, insbesondere einer Felge, und der Funktionsweise des Rad-Bauteils 1, falls sich die Felgenscheibe 3 in einem Geschlossen-Zustand befindet.

Gleiche und funktionsgleiche Elemente sind in allen Figuren mit gleichen Bezugszeichen versehen, sodass insofern jeweils auf die vorangegangene Beschreibung verwiesen wird.

Figur 2 a) und Figur 2 b) zeigen das Rad-Bauteil 1 in einer Seitenansicht in dem Geschlossen-Zustand. In diesen Ansichten ist deutlich zu sehen, dass die Felgenscheibe 3 mit einer äußeren Stirnfläche an einer inneren Stirnfläche des Aero-Rings 9 abdichtend anliegt, wodurch nahezu keine Luftströmung 17 durch das Rad-Bauteil 1 ermöglicht wird.

Figur 2 c) zeigt einen Querschnitt durch das Kraftfahrzeug 19, welches das Rad-Bauteil 1 aufweist. Das Kraftfahrzeug 19 bewegt sich in die Fahrtrichtung 21 und wird dadurch dem Fahrtwind 23 ausgesetzt. Die Felgenscheibe 3 befindet sich in dem Geschlossen-Zustand. In dem Geschlossen-Zustand liegt die Felgenscheibe vorzugsweise abdichtend an dem Aero-Ring 9 an, wodurch nahezu keine Luftströmung 17 durch das Rad-Bauteil 1 ermöglicht wird. Hinter der Bremsscheiben 27 entsteht zwar ein Luftzirkulation 31, jedoch kann keine Luft durch das Rad-Bauteil abgeleitet werden und somit ist nahezu keine Kühlung der Bremsscheibe 27 möglich.

Ein Vergleich von Figur 1 mit Figur 2 zeigt, dass in dem Offenzustand eine bessere Luftströmung 17 durch das Rad-Bauteil 1 ermöglicht wird als in dem Geschlossen-Zustand.

Die Felgenscheibe 3 wird in Abhängigkeit von mindestens einem Parameter in Richtung der Drehachse 7 relativ zu der Radnabe 5 des Rad-Bauteils 1 zwischen dem Offen-Zustand, insbesondere dargestellt in Figur 1, und dem Geschlossen-Zustand, insbesondere dargestellt in Figur 2, verlagert, wobei der Offen-Zustand eine bessere Luftströmung 17 durch das Rad-Bauteil 1 ermöglicht als der Geschlossen-Zustand.

Vorzugsweise ist der mindestens eine Parameter ausgewählt aus einer Gruppe, bestehend aus einer Drehgeschwindigkeit des Rad-Bauteils 1, eine Betätigungsanzahl einer Bremsanlage in einem vorbestimmten Zeitintervall, einer Bremsscheiben-Temperatur, und einer Eingabe eines Fahrers des Kraftfahrzeugs 19.

Vorzugsweise wird die Felgenscheibe 3 in den Offen-Zustand verlagert oder verbleibt in dem Offen-Zustand, falls die Drehgeschwindigkeit kleiner ist als eine vorbestimmte erste Grenz-Drehgeschwindigkeit. Weiterhin wird die Felgenscheibe 3 in den Geschlossen-Zustand verlagert oder verbleibt in dem Geschlossen-Zustand, falls die Drehgeschwindigkeit größer ist als oder gleich ist wie eine vorbestimmte zweite Grenz-Drehgeschwindigkeit.

Alternativ oder zusätzlich wird vorzugsweise die Felgenscheibe 3 in den Offen-Zustand verlagert oder verbleibt in dem Offen-Zustand, falls die Betätigungsanzahl der Bremsanlage in dem vorbestimmten Zeitintervall größer ist als eine vorbestimmte erste Grenz-Betätigungsanzahl. Weiterhin wird die Felgenscheibe 3 in den Geschlossen-Zustand verlagert oder verbleibt in den Geschlossen-Zustand, falls die Betätigungsanzahl der Bremsanlage in dem vorbestimmten Zeitintervall kleiner ist als oder gleich ist wie eine vorbestimmte zweite Grenz-Betätigungsanzahl.

Alternativ oder zusätzlich wird vorzugsweise die Felgenscheibe 3 in den Offen-Zustand verlagert oder verbleibt in dem Offen-Zustand, falls die Bremsscheiben-Temperatur größer ist als eine vorbestimmte erste Grenz-Temperatur. Weiterhin wird die Felgenscheibe 3 in den Geschlossen-Zustand verlagert oder verbleibt in dem Geschlossen-Zustand, falls die Bremsscheiben-Temperatur kleiner ist als oder gleich ist wie eine vorbestimmte zweite Grenz-Temperatur.

## Patentansprüche

1. Rad-Bauteil (1) für ein Kraftfahrzeug (19), wobei das Rad-Bauteil (1) ein Felgenbett (11), eine Radnabe (5) sowie eine Felgenscheibe (3) aufweist, wobei
- die Felgenscheibe (3) in Richtung einer Drehachse (7) des Rad-Bauteils (1) relativ zu der Radnabe (5) zwischen einem Offen-Zustand und einem Geschlossen-Zustand mittels einer Felgenscheiben-Verlagerungsvorrichtung (6) verlagerbar ist, und
- bei im Offen-Zustand angeordneter Felgenscheibe (3) eine bessere Luftströmung (17) durch das Rad-Bauteil (1) ermöglicht ist als bei im Geschlossen-Zustand angeordneter Felgenscheibe (3), **dadurch gekennzeichnet, dass** das Rad-Bauteil einen Aero-Ring (9) aufweist, welcher in Umfangsrichtung am Felgenbett (11) anliegt und derart flächig ausgebildet ist, dass dieser einen Kreisring ausgehend von dem Felgenbett (11) radial in Richtung der Radnabe (5) bildet, und dass bei in Geschlossen-Zustand angeordneter Felgenscheibe (3) diese mit einer äußeren Stirnfläche an einer inneren Stirnfläche des Aero-Rings (9) zumindest bereichsweise abdichtend anliegt.

2. Rad-Bauteil (1) nach Anspruch 1, wobei das Rad-Bauteil (1) eine Felge ist.

3. Rad-Bauteil (1) nach einem der vorhergehenden Ansprüche, wobei die Felgenscheibe (3) drehfest mit der Radnabe (5) verbunden ist.

4. Rad-Bauteil (1) nach einem der vorhergehenden Ansprüche, wobei die Felgenscheibe (3) und der Aero-Ring (9) aus dem gleichen Material bestehen.

5. Verfahren zum Betreiben eines Rad-Bauteils (1) nach einem der vorhergehenden Ansprüche, an einem Kraftfahrzeug (19), wobei
- eine Felgenscheibe (3) in Abhängigkeit von mindestens einem Parameter in Richtung einer Drehachse (7) relativ zu einer Radnabe (5) des Rad-Bauteils (1) zwischen einem Offen-Zustand und einen Geschlossen-Zustand verlagert wird, wobei
- der Offen-Zustand eine bessere Luftströmung (17) durch das Rad-Bauteil (1) ermöglicht als der Geschlossen-Zustand.

6. Verfahren nach Anspruch 5, wobei der mindestens eine Parameter ausgewählt ist aus einer Gruppe, bestehend aus einer Drehgeschwindigkeit des Rad-Bauteils (1), einer Betätigungsanzahl einer Bremsanlage in einem vorbestimmten Zeitintervall, einer Bremsscheiben-Temperatur, und einer Eingabe eines Fahrers des Kraftfahrzeugs (19).

7. Verfahren nach Anspruch 6, wobei
- die Felgenscheibe (3) in den Offen-Zustand verlagert wird oder in dem Offen-Zustand verbleibt, falls die Drehgeschwindigkeit kleiner ist als eine vorbestimmte erste Grenz-Drehgeschwindigkeit, wobei
- die Felgenscheibe (3) in den Geschlossen-Zustand verlagert wird oder in dem Geschlossen-Zustand verbleibt, falls die Drehgeschwindigkeit größer ist als oder gleich ist wie eine vorbestimmte zweite Grenz-Drehgeschwindigkeit.

8. Verfahren nach Anspruch 6 oder 7, wobei
- die Felgenscheibe (3) in den Offen-Zustand verlagert wird oder in dem Offen-Zustand verbleibt, falls die Betätigungsanzahl der Bremsanlage in dem vorbestimmten Zeitintervall größer ist als eine vorbestimmte erste Grenz-Betätigungsanzahl, wobei
- die Felgenscheibe (3) in den Geschlossen-Zustand verlagert wird oder in dem Geschlossen-Zustand verbleibt, falls die Betätigungsanzahl der Bremsanlage in dem vorbestimmten Zeitintervall kleiner ist als oder gleich ist wie eine vorbestimmte zweite Grenz-Betätigungsanzahl.

9. Verfahren nach einem der Ansprüche 6 bis 8, wobei
- die Felgenscheibe (3) in den Offen-Zustand verlagert wird oder in dem Offen-Zustand verbleibt, falls die Bremsscheiben-Temperatur größer ist als eine vorbestimmte erste Grenz-Temperatur, wobei
- die Felgenscheibe (3) in den Geschlossen-Zustand verlagert wird oder in dem Geschlossen-Zustand verbleibt, falls die Bremsscheiben-Temperatur kleiner ist als oder gleich ist wie eine vorbestimmte zweite Grenz-Temperatur.

## Claims

1. Wheel component (1) for a motor vehicle (19), wherein
the wheel component (1) comprises a rim base (11), a wheel hub (5) and a rim disk (3),
wherein
- the rim disk (3) can be moved in the direction of an axis of rotation (7) of the wheel component (1), relative to the wheel hub (5), between an open state and a closed state by means of a rim disk movement device (6),
and
- when the rim disk (3) is arranged in the open state, a better airflow (17) through the wheel component (1) is allowed than when the rim disk (3) is arranged in the closed state, **characterized in that** the wheel component has an aero ring (9) which rests on the rim base (11) in a circumferential direction and is designed to be planar such that it forms an annulus from the rim base (11) radially in the direction of the wheel hub (5), and **in that** when the rim disk (3) is arranged in the closed state, the rim disk rests, at least in parts, sealingly with an outer end face thereof against an inner end face of the aero ring (9).

2. Wheel component (1) according to claim 1, wherein the wheel component (1) is a rim.

3. Wheel component (1) according to either of the preceding claims, wherein the rim disk (3) is connected to the wheel hub (5) in a rotationally fixed manner.

4. Wheel component (1) according to any of the preceding claims, wherein the rim disk (3) and the aero ring (9) are made of the same material.

5. Method for operating a wheel component (1) according to any of the preceding claims on a motor vehicle (19), wherein
- a rim disk (3) is moved, depending on at least one parameter, in the direction of an axis of rotation (7) relative to a wheel hub (5) of the wheel component (1) between an open state and a closed state, wherein
- the open state allows a better airflow (17) through the wheel component (1) than the closed state.

6. Method according to claim 5, wherein the at least one parameter is selected from a group consisting of a rotational speed of the wheel component (1), a number of actuations of a braking system in a predetermined time interval, a brake disk temperature, and an input from a driver of the motor vehicle (19).

7. Method according to claim 6, wherein
- the rim disk (3) is moved into the open state or remains in the open state if the rotational speed is less than a predetermined first limit rotational speed, wherein
- the rim disk (3) is moved into the closed state or remains in the closed state if the rotational speed is greater than or equal to a predetermined second limit rotational speed.

8. Method according to claim 6 or claim 7, wherein
- the rim disk (3) is moved into the open state or remains in the open state if the number of actuations of the braking system in the predetermined time interval is greater than a predetermined first limit number of actuations, wherein
- the rim disk (3) is moved into the closed position or remains in the closed position if the number of actuations of the braking system in the predetermined time interval is less than or equal to a predetermined second limit number of actuations.

9. Method according to any of claims 6 to 8, wherein
- the rim disk (3) is moved into the open state or remains in the open state if the brake disk temperature is greater than a predetermined first limit temperature, wherein
- the rim disk (3) is moved into the closed state or remains in the closed state if the brake disk temperature is less than or equal to a predetermined second limit temperature.

## Revendications

1. Composant de roue (1) pour un véhicule automobile (19), dans lequel
le composant de roue (1) présente une embase de jante (11), un moyeu de roue (5) ainsi qu'un disque de jante (3),
dans lequel
- le disque de jante (3) peut être déplacé dans la direction d'un axe de rotation (7) du composant de roue (1) par rapport au moyeu de roue (5) entre un état ouvert et un état fermé au moyen d'un dispositif de déplacement de disque de jante (6),
et
- lorsque le disque de jante (3) est disposé à l'état ouvert, un meilleur écoulement d'air (17) est possible à travers le composant de roue (1) que lorsque le disque de jante (3) est disposé à l'état fermé, **caractérisé en ce que** le composant de roue présente un anneau aérodynamique (9) qui s'applique dans la direction circonférentielle contre l'embase de jante (11) et qui est réalisé de manière plane de telle sorte que celui-ci forme un anneau circulaire en partant de l'embase de jante (11) radialement en direction du moyeu de roue (5), **et en ce que** lorsque le disque de jante (3) est disposé à l'état fermé, celui-ci s'applique de manière étanche au moins dans certaines zones avec une surface frontale extérieure contre une surface frontale intérieure de l'anneau aérodynamique (9).

2. Composant de roue (1) selon la revendication 1, dans lequel le composant de roue (1) est une jante.

3. Composant de roue (1) selon l'une des revendications précédentes, dans lequel le disque de jante (3) est solidaire en rotation du moyeu de roue (5).

4. Composant de roue (1) selon l'une des revendications précédentes, dans lequel le disque de jante (3) et l'anneau aérodynamique (9) sont réalisés dans le même matériau.

5. Procédé permettant de faire fonctionner un composant de roue (1) selon l'une des revendications précédentes, sur un véhicule automobile (19), dans lequel
- un disque de jante (3) est déplacé en fonction d'au moins un paramètre dans la direction d'un axe de rotation (7) par rapport à un moyeu de roue (5) de composant de roue (1) entre un état ouvert et un état fermé, dans lequel
- l'état ouvert permet un meilleur écoulement d'air (17) à travers le composant de roue (1) que l'état fermé.

6. Procédé selon la revendication 5, dans lequel l'au moins un paramètre est choisi dans un groupe constitué d'une vitesse de rotation du composant de roue (1), d'un nombre d'actionnements d'un système de freinage dans un intervalle de temps prédéterminé, d'une température de disque de frein, et d'une entrée d'un conducteur du véhicule automobile (19).

7. Procédé selon la revendication 6, dans lequel
- le disque de jante (3) est déplacé vers l'état ouvert ou reste dans l'état ouvert si la vitesse de rotation est inférieure à une première vitesse de rotation limite prédéterminée, dans lequel
- le disque de jante (3) est déplacé vers l'état fermé ou reste dans l'état fermé si la vitesse de rotation est supérieure ou égale à une seconde vitesse de rotation limite prédéterminée.

8. Procédé selon la revendication 6 ou 7, dans lequel
- le disque de jante (3) est déplacé vers l'état ouvert ou reste dans l'état ouvert si le nombre d'actionnements du système de freinage dans l'intervalle de temps prédéterminé est supérieur à un premier nombre d'actionnements limite prédéterminé, dans lequel
- le disque de jante (3) est déplacé vers l'état fermé ou reste dans l'état fermé si le nombre d'actionnements du système de freinage dans l'intervalle de temps prédéterminé est inférieur ou égal à un second nombre d'actionnements limite prédéterminé.

9. Procédé selon l'une des revendications 6 à 8, dans lequel
- le disque de jante (3) est déplacé vers l'état ouvert ou reste dans l'état ouvert si la température de disque de frein est supérieure à une première température limite prédéterminée, dans lequel
- le disque de jante (3) est déplacé vers l'état fermé ou reste dans l'état fermé si la température de disque de frein est inférieure ou égale à une seconde température limite prédéterminée.
